Europäisches Patentamt

European Patent Office

Office européen des brevets

(11) Veröffentlichungsnummer: **0 198 270 B1**

# (12) EUROPÄISCHE PATENTSCHRIFT

(45) Veröffentlichungstag der Patentschrift: **26.06.91**

(51) Int. Cl.5: **B01J 31/08, B01J 37/10**

(21) Anmeldenummer: **86103941.0**

(22) Anmeldetag: **22.03.86**

(54) Verfahren zur Behandlung von starksauren Kationenaustauscher-Katalysatoren.

(30) Priorität: **06.04.85 DE 3512517**

(43) Veröffentlichungstag der Anmeldung:
**22.10.86 Patentblatt 86/43**

(45) Bekanntmachung des Hinweises auf die
Patenterteilung:
**26.06.91 Patentblatt 91/26**

(84) Benannte Vertragsstaaten:
**AT BE DE FR GB IT NL SE**

(56) Entgegenhaltungen:
**US-A- 3 855 343**
**US-A- 3 965 039**
**US-A- 4 269 943**
**US-A- 4 298 502**

(73) Patentinhaber: **RWE-DEA Aktiengesellschaft**
**für Mineraloel und Chemie**
**Überseering 40**
**W-2000 Hamburg 60(DE)**

(72) Erfinder: **Brandes, Günter**
**Karoxbostelerweg 21**
**W-2105 Seevetal 1(DE)**
Erfinder: **Neier, Wilhelm**
**An der Landwehr 40**
**W-4134 Rheinberg 3(DE)**
Erfinder: **Webers, Werner**
**Rektor-Horn-Strasse 42**
**W-4134 Rheinberg 3(DE)**

(74) Vertreter: **Schupfner, Gerhard D.**
**Müller, Schupfner & Gauger Karlstrasse 5**
**Postfach 14 27**
**W-2110 Buchholz/Nordheide(DE)**

## Beschreibung

Die Erfindung betrifft ein Verfahren zur Behandlung von starksauren Kationenaustauscher-Katalysatoren auf Basis von Styrol/Divinylbenzol-Copolymerisaten.

Kationenaustauscher-Katalysatoren werden neuerdings vielfach zur umweltfreundlichen Durchführung von durch Säuren katalysierten Synthesen in der organischen Chemie eingesetzt. Es handelt sich hierbei um Synthesen wie Veresterungen, Esterspaltungen, Hydrolysen, Kondensationen, Hydratisierungen sowie Alkylierungen und Acetylierungen von Aromaten. Sie haben gegenüber der Verwendung flüssiger Säuren den Vorteil, daß der Katalysator ohne weiteres vom Produkt abgetrennt werden kann und keine Abfallsäuren wie bei der konventionellen homogenen Katalyse anfallen.

Voraussetzung für den praktischen Einsatz von festen Kationenaustauschern anstelle flüssiger Säure ist neben hinreichender Selektivität und Raum/Zeit-Ausbeute die thermische Stabilität der Copolymerisate unter den jeweiligen Reaktionsbedingungen.

Im besonderen Maße thermostabil sind mit Halogen kernsubstituierte, starksaure Styrol/Divinylbenzol-Copolymerisate, welche unter Temperaturbedingungen im Bereich von 100 bis 200°C für durch Säuren katalysierte Synthesen, wie z.B. zur Hydratisierung von niederen Olefinen oder zu Alkylierungsreaktionen verwendet werden.

In der britischen Patentschrift 1 393 594 ist die Herstellung von mindestens einfach mit Halogen kernsubstituierten Kationenaustauschern beschrieben und auf deren Verwendung als thermisch stabile Katalysatoren für Reaktionen in wäßrigen und wasserfreien Medien bei Temperaturen zwischen 100 und 200°C hingewiesen.

In den letzten Jahren haben kernchlorierte und kernfluorierte starksaure Kationenaustauscher besondere Beachtung als Katalysatoren gefunden.

Die zur Herstellung verwendeten kernhalogenierten aromatischen Monomeren, wie z.B. Chlorstyrol oder Fluorstyrol, sind jedoch nicht oder nur zu unverhältnismäßig hohem Preis auf dem Markt erhältlich.

In den US-Patentschriften 3 256 250 und 4 269 943 werden Herstellungsweisen von kernhalogenierten starksauren Kationenaustauschern beschrieben, bei denen im Falle der erstgenannten Patentschrift das Styrol/Divinylbenzol-Copolymerisat zunächst sulfoniert und anschließend kernchloriert bzw. kernfluoriert oder aber im Falle der zweitgenannten Patentschrift zunächst kernchloriert bzw. kernbromiert und anschließend sulfoniert wurde.

Die auf die eine oder andere Weise hergestellten kernhalogenierten starksauren Kationenaustauscher spalten beim Einsatz als Katalysatoren in den ersten 200 bis 300 Stunden Halogenwasserstoff und Schwefelsäure ab. Bei der Hydratisierung niederer Olefine mit 3 bis 5 Kohlenstoffatomen zu den entsprechenden Alkoholen z.B., vorzugsweise bei den Synthesen von Isopropylalkohol und sec.-Butylalkohol, werden große Mengen Chlor- und Sulfonsäuregruppen aus dem chlorierten Katalysator in Form von Salz- bzw. Schwefelsäure abgespalten. In Reaktoren aus Edelstahl werden derart starke Korrosionen, Loch- und Spannungsrißkorrosionen, beobachtet, daß Reaktoreinbauten und -auskleidungen zerstört werden. Gleichzeitig erfährt ein solcher Katalysator einen Aktivitätsverlust bis zu 50 %, und ein Teil der Katalysatormatrix wird zerstört.

Der Erfindung liegt daher die Aufgabe zugrunde, ein Verfahren bereitzustellen, das den Einsatz von starksauren Kationenaustauscher-Katalysatoren auf Basis von mit Halogen kernsubstituierten Styrol/Divinylbenzol-Copolymerisaten in Edelstahlreaktoren erlaubt und Aktivitätsverluste sowie Matrixzerstörung ausschließt bzw. in tragbaren Grenzen hält.

Diese Aufgabe wird erfindungsgemäß dadurch gelöst, daß man einen mit Halogen kernsubstituierten, starksauren Kationenaustauscher vor seinem Einsatz als Katalysator unter Ausschluß von Sauerstoff und Metallionen unter Druck, der über dem Dampfdruck des Wassers bei der jeweiligen Temperatur liegt, einer Vorbehandlung mit entionisiertem Wasser, das zuvor von gelöstem Sauerstoff befreit wurde, bei einer Temperatur im Bereich von 110 bis 155°C unterwirft.

Die Vorbehandlung erfolgt zweckmäßigerweise in einer Apparatur, deren in Kontakt mit dem starksauren Kationenaustauscher und der Behandlungsflüssigkeit stehende Oberflächen kein Eisen enthalten, etwa in Apparaturen, die mit Emaille, Glas, Keramik, Teflon oder anderen thermisch stabilen Kunststoffen ausgekleidet sind.

Vorzugsweise wird das Wasser vor seiner Verwendung von gelöstem Sauerstoff befreit.

Nach einer besonders bevorzugten Ausführungsform wird die Vorbehandlung mit einer Lösung von einem oder mehreren Alkoholen mit 1 bis 4 Kohlenstoffatomen, insbesondere mit 3 oder 4 Kohlenstoffatomen, in dem entionisierten Wasser durchgeführt, wobei zweckmäßigerweise die Alkohollösung 0,5 bis 20 Vol.%, vorzugsweise 1 bis 10 Vol.% des Alkohols enthält.

Die Vorbehandlung wird insbesondere bis zu einer Abspaltungsrate von weniger als 25 mg $H_2SO_4/l$

2

EP 0 198 270 B1

alysator x h und 7 mg HCl/l catalysator x h durchgeführt.

Es wurde festgestellt, daß eine Waschung eines kernchlorierten Katalysators mit entmineralisiertem Wasser bei 110 bis 155°C unter Druck in einem Edelstahlgefäß zur Beeinträchtigung seiner mechanischen Stabilität führte. Ein Teil des Katalysators hatte dann seine mechanische Stabilität infolge Depolymerisation vollkommen verloren.

Wurde jedoch die Waschung des Katalysators mit entmineralisiertem Wasser bei 110 bis 155°C unter Druck über etwa 400 Stunden in einem emailliertem Gefäß durchgeführt, so war die Abspaltrate an Chlor- und Sulfonsäuregruppen ($SO_3H^-$) danach so gering, daß der kernchlorierte starksaure Kationenaustauscher zunächst problemlos als Katalysator, z.B. zur Hydratisierung niederer Olefine mit 3 bis 5 Kohlenstoffatomen zu den entsprechenden Alkoholen, eingesetzt werden konnte. Ein höherer Anteil (ca. 50 mg/l Wasser) an organischen Sulfonsäuren im Waschwasser deutete jedoch auf eine verminderte Langzeitstabilität des Katalysators hin.

Überraschend wurde gefunden, daß bei Durchführung der Vorbehandlung unter Ausschluß von Sauerstoff und Metallionen mit entmineralisiertem Wasser, und insbesondere mit einer Lösung von $C_3$- oder $C_4$- Alkoholen in dem entionisierten Wasser, die thermische und mechanische Stabilität eines durch Halogenierung und anschließender Sulfonierung einer Styrol/Divinylbenzolmatrix oder in umgekehrter Reihenfolge hergestellten starksauren Kationenaustauschers über mehr als 8000 Stunden voll erhalten bleibt. Die Verwendung eines 0,5 bis 20 %, vorzugsweise 1 bis 10 %igen wäßrigen $C_3$- oder $C_4$-Alkohols verkürzte die Behandlungszeit gegenüber entmineralisiertem Wasser um 50 %. In der ausgetragenen alkoholischen Lösung ließen sich weniger als 2 mg pro Liter oligomerer Sulfonsäurebruchstücke nachweisen.

Ein so behandelter kernhalogenierter starksaurer Kationenaustauscher kann sowohl bei der Direkthydratation von Propen zu Isopropylalkohol als auch bei der Hydratation von n-Butenen zu sec.-Butylalkohol bei Temperaturen über 150°C in herkömmlichen Edelstahlreaktoren ohne Korrosionsprobleme eingesetzt werden. Auch die Katalysatoraktivität bleibt über mehrere tausend Stunden nahezu unverändert.

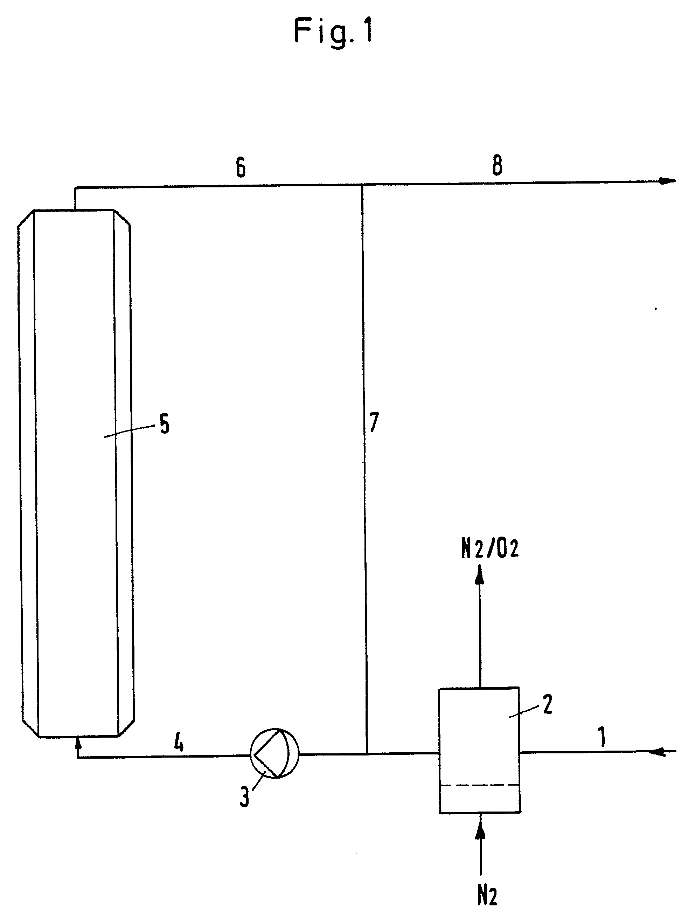

Eine bevorzugte Ausführungsform für die Vorbehandlung von kernhalogenierten starksauren Kationenaustauschern ist in Figur 1 dargestellt. Hierbei wird entmineralisiertes Wasser oder die alkoholische Lösung über Leitung 1 in Vorrichtung 2 gegeben, dort durch Austreiben mit Stickstoff vom gelösten Sauerstoff befreit und dann über Leitung 4 mittels einer Pumpe 3 in das Behandlungsgefäß 5 befördert. Dabei ist es sowohl möglich, das Wasser oder die wäßrige alkoholische Lösung ein Mal durch das Behandlungsgefäß 5 zu schicken und dann über Leitungen 6 und 8 abzuführen, als auch 80 bis 90 % im Kreislauf über Leitungen 6,7 und 4 zu fahren und nur 10 bis 20 % als Abwasser aus dem Kreislauf über Leitung 8 auszuschleusen. Die Kreislaufführung ist aufgrund des sonst hohen Verbrauches an entmineralisiertem Wasser oder der alkoholischen Lösung besonders bei einer großtechnischen Ausführung von Vorteil.

Die folgenden Beispiele erläutern die Erfindung. Zur Abprüfung der erfindungsgemäß vorbehandelten Katalysatoren wurden diese zur Herstellung von Isopropylalkohol (IPA) aus Propen gemäß Beispiel 9 der deutschen Patentschrift 22 33 967 bzw. zur Herstellung von sec-Butanol (SBA) aus n-Butenen gemäß Beispiel 2 der deutschen Patentschrift 24 29 770 eingesetzt.


Vergleichsbeispiel

Das in Fig. 1 dargestellte Behandlungsgefäß bestand aus einem Edelstahlrohr 1.4571 von 3,0 m Länge und 26 mm Durchmesser. Zur Temperatureinstellung wurde das Edelstahlrohr mit einem Dampfmantel versehen. Alle verbindenden Rohrleitungen und die Pumpe 3 waren aus dem gleichen Werkstoff (1.4571) gefertigt. In diese Vorbehandlungsapparatur gemäß Fig. 1 wurden 1.000 ml eines Kationenaustauschers eingefüllt, der 3,7 mval/g Trockensubstanz Sulfonsäure und 5,5 mval/g Trockensubstanz Chlor enthielt.

Über Leitung 1 wurden stündlich 1 l entmineralisiertes, noch Restsauerstoff enthaltendes Wasser dem Edelstahlrohr am Sumpf zugepumpt. Mittels Dampfbeheizung wurde eine Temperatur von 155°C eingestellt. Am Kopf des Edelstahlrohrs wurde der im Rohr eingehaltene Druck von 10 bar entspannt und der durch hydrolytische Abspaltung der $Cl^-$- und $SO_3H^-$-Gruppen Salz- und Schwefelsäure enthaltende Wasserstrom auf 20°C abgekühlt. Die erhaltenen Salz- und Schwefelsäureraten wurden analytisch verfolgt. Die ermittelten Werte in mg pro Liter Katalysator und Stunde (mg/l KAT x h) nach der jeweils angegebenen Anzahl Stunden sind in Tabelle I zusammengestellt.

## TABELLE I

| nach Stunden | mg H$_2$SO$_4$ / l KAT x h | mg HCl / l KAT x h | mg org. Sulfonsäure / l KAT x h |
|---|---|---|---|
| 4 | 190 | 1.030 | 1.350 |
| 24 | 60 | 175 | 850 |
| 72 | 45 | 80 | 800 |
| 120 | 35 | 29 | 580 |
| 240 | 29 | 12 | 550 |
| 360 | 21 | 6 | 530 |

Bei Entnahme des Katalysators aus der Vorbehandlungsapparatur wurde festgestellt, daß etwa 20 % des Katalysators zu einem braunen, durchsichtigen, froschlaichähnlichen Produkt geworden waren.

Eine Untersuchung des unzerstörten Katalysatoranteils zeigte eine 28 %ige Beladung der Restkapazität. Ferner war die mechanische Stabilität des unzerstörten Katalysatoranteils stark beeinträchtigt. Bei Einsatz dieses Katalysators zur IPA-Synthese durch Direkthydratisierung von Propen erreichte er nur etwa 50 % der erwarteten Leistung.

Beispiel 1

Der im Vergleichsbeispiel beschriebene Versuch wurde unter sonst gleichen Bedingungen in einer Apparatur durchgeführt, bei der das Behandlungsgefäß 5 aus einem 3 m langen, ummantelten, innen emaillierten Rohr bestand und die verbindenden Leitungen und die Pumpe aus Teflon gefertigt waren.

Die ermittelten Salz- und Schwefelsäure-Abspaltungsraten sind in Tabelle II zusammengestellt.

## TABELLE II

| nach Stunden | mg H$_2$SO$_4$ / l KAT x h | mg HCl / l KAT x h | mg org. Sulfonsäure / l KAT x h |
|---|---|---|---|
| 4 | 185 | 1.010 | 68 |
| 24 | 61 | 174 | 45 |
| 72 | 44 | 78 | 38 |
| 120 | 36 | 29 | 38 |
| 240 | 28 | 13 | 35 |
| 360 | 20 | 6 | 29 |

Der aus der Vorbehandlungsapparatur entnommene Katalysator war diesmal vollkommen unzerstört. Bei Einsatz dieses Katalysators zur SBA-Synthese durch Direkthydratisierung von n-Butenen wurde in Langzeitversuchen allerdings noch eine verminderte mechanische Stabilität festgestellt. Der Katalysator erreicht nur etwa 85 % der erwarteten Leistung.

Beispiel 2

Der in Beispiel 1 beschriebene Versuch wurde mit der Maßgabe wiederholt, daß der entmineralisierte Wasserstrom vor Eintritt in das Behandlungsgefäß mit Hilfe einer Stickstoffdurchperlung über eine Fritte vom gelösten Sauerstoff befreit wurde. Folgende Abspaltungsraten wurden erhalten:

## TABELLE III

| nach Stunden | $\dfrac{mg\ H_2SO_4}{1\ KAT\ x\ h}$ | $\dfrac{mg\ HCl}{1\ KAT\ x\ h}$ | $\dfrac{mg\ org.\ Sulfonsäuren}{1\ KAT\ x\ h}$ |
|---|---|---|---|
| 4 | 188 | 1.015 | 2,0 |
| 24 | 60 | 171 | 1,5 |
| 72 | 41 | 80 | 1,2 |
| 120 | 35 | 30 | 1,3 |
| 240 | 28 | 12 | 1,0 |
| 360 | 19 | 5 | 1,0 |

Der so behandelte Katalysator war vollkommen unzerstört und zeigt in Langzeitversuchen bei der SBA-Synthese durch Direkthydratation von n-Butenen über 8.000 Stunden keine merkliche Beeinträchtigung der mechanischen Stabilität.

Beispiel 3

Beispiel 2 wurde mit der Maßgabe wiederholt, daß anstelle des von gelöstem Sauerstoff befreiten Wassers eine der gleichen Behandlung unterzogene 10 % Isopropylalkohol enthaltende wäßrige Lösung eingesetzt wurde. Unter sonst gleichen Bedingungen wurde die Behandlungszeit um die Hälfte auf 180 Stunden verkürzt. Die Eigenschaften und die Aktivität des behandelten Katalysators waren dem des aus Beispiel 2 erhaltenen gleich, wie beim Einsatz dieses Katalysators zur Synthese von SBA festgestellt wurde.

Beispiel 4

Beispiel 2 wurde mit der Maßgabe wiederholt, daß anstelle des von gelöstem Sauerstoff befreiten Wassers eine der gleichen Behandlung unterzogene 1 % SBA enthaltende wäßrige Lösung eingesetzt wurde. Nach 180 Stunden waren die durch hydrolytische Abspaltung erhaltenen Schwefelsäure- bzw. Salzsäureraten bei 22 mg $H_2SO_4$/l Katalysator x h bzw. 6 mg HCl/l Katalysator x h angelangt. Der Gehalt an Sulfonsäurebruchstücken (organische Sulfonsäuren) lag immer unter 2 mg/l Katalysator x h. Der Katalysator zeigte bei der SBA-Synthese die gleichen guten Eigenschaften wie der nach Beispiel 3 erhaltene Katalysator.

Beispiel 5

Beispiel 4 wurde mit der Maßgabe wiederholt, daß die Behandlung mit der gleichen 1 % SBA enthaltenden Lösung bei 110° C gestartet und auf 155° C gesteigert wurde. Ferner wurden zur Minimierung der anfallenden wäßrigen Lösung 90 % der Lösung im Kreislauf gefahren und nur 10 % ausgeschleust. Folgende Abspaltungsraten wurden erhalten:

## TABELLE IV

| nach Stunden | mg $H_2SO_4$ / 1 KAT x h | mg HCl / 1 KAT x h | mg org.Sulfonsäuren / 1 KAT x h | Temp. °C |
|---|---|---|---|---|
| 4 | 54 | 302 | 1,5 | 110 |
| 24 | 35 | 95 | 1,1 | 120 |
| 72 | 38 | 71 | 1,2 | 148 |
| 100 | 37 | 62 | 1,4 | 155 |
| 120 | 34 | 40 | 1,4 | 155 |
| 160 | 29 | 17 | 1,2 | 155 |
| 200 | 22 | 9 | 1,0 | 155 |
| 210 | 21 | 6 | 1,1 | 155 |

Der so behandelte Katalysator war hinsichtlich seiner Eigenschaften und Aktivität mit den aus den Beispielen 3 und 4 erhaltenen Katalysatoren gleich, wie gleichermaßen bei der Synthese von IPA und SBA durch Direkthydratation der entsprechenden Olefine festgestellt wurde.

Aufgrund des durch das Temperaturprogramm verminderten Gesamtverlustes an Sulfonsäure erreicht dieser Katalysator längere Standzeiten in den Alkohol-Synthesen durch Direkthydratation bzw. in einer Alkylierungssynthese.

## Ansprüche

1.  Verfahren zur Behandlung von starksauren Kationenaustauscher-Katalysatoren auf Basis von Styrol/Divinylbenzol-Copolymerisaten,
    **dadurch gekennzeichnet,**
    daß man einen mit Halogen kernsubstituierten, starksauren Kationenaustauscher vor seinem Einsatz als Katalysator unter Ausschluß von Sauerstoff und Metallionen unter Druck, der über dem Dampfdruck des Wassers bei der jeweiligen Temperatur liegt, einer Vorbehandlung mit entionisiertem Wasser, das zuvor von gelöstem Sauerstoff befreit wurde, bei einer Temperatur im Bereich von 110 bis 155 °C unterwirft.

2.  Verfahren nach Anspruch 1,
    **dadurch gekennzeichnet,**
    daß man die Vorbehandlung in einer Apparatur durchführt, deren in Kontakt mit dem starksauren Kationenaustauscher und der Behandlungsflüssigkeit stehende Materialien kein Eisen enthalten.

3.  Verfahren nach einem der vorhergehenden Ansprüche,
    **dadurch gekennzeichnet,**
    daß man die Vorbehandlung in einer wäßrigen Lösung durchführt, die einen oder mehrere Alkohole mit 1 bis 4 Kohlenstoffatomen enthält.

4.  Verfahren nach Anspruch 3,
    **dadurch gekennzeichnet,**
    daß man eine wäßrige Lösung eines Alkohols mit 3 oder 4 Kohlenstoffatomen einsetzt.

5.  Verfahren nach einem der Ansprüche 3 oder 4,
    **dadurch gekennzeichnet,**
    daß man eine wäßrige Alkohollösung einsetzt, die 0,5 bis 20 Vol.%, vorzugsweise 1 bis 10 Vol.%, des Alkohols enthält.

**6.** Verfahren nach einem der vorhergehenden Ansprüche,
**dadurch gekennzeichnet,**
daß man die Behandlung bei 110 °C beginnt und die Temperatur bis auf 155 °C erhöht.

**7.** Verfahren nach einem der vorhergehenden Ansprüche,
**dadurch gekennzeichnet,**
daß man die Behandlung bis zu einer Abspaltungsrate von weniger als 25 mg $H_2SO_4$/l Katalysator x h und weniger als 7 mg HCl/l Katalysator x h führt.

**Claims**

**1.** A process for the pretreatment of a halogenated and sulfonated strongly acidic cation exchange resin catalyst based on a styrene/divinyl benzene copolymerizate which comprises treating said catalyst with deionized water freed from dissolved oxygen, said treatment being conducted in the absence of oxygen and metal ions, at a temperature in the range Of 110 °C to about 155 °C and under pressure greater than the respective steam pressure.

**2.** A process in accordance with claim 1 wherein the pretreatment is performed in an apparatus those parts of which that are contacted by the strongly acidic cation exchanger and the treatment liquid must be free from iron.

**3.** A process as claimed in any of the preceding claims wherein the pretreatment is performed in an aqueous solution containing one or more alcohols having from 1 to 4 carbon atoms.

**4.** A process in accordance with claim 3 wherein an aqueous solution of an alcohol having from 3 to 4 carbon atoms is used.

**5.** A process in accordance with claim 3 or 4 wherein an aqueous alcoholic solution is employed at a concentration ranging from 0.5 to 20 volume percent, preferably from 1 to 10 volume percent alcohol.

**6.** A process as claimed in any of the preceding claims wherein the pretreatment is started at 110 °C and the temperature is raised to 155 °C.

**7.** A process as claimed in any of the preceding claims wherein the pretreatment severity is limited to a release of less than 25 milligrams of sulfuric acid per liter of catalyst and hour and less than 7 milligrams of hydrochloric acid per liter of catalyst and hour.

**Revendications**

**1.** Procédé de traitement de catalyseurs formés d'échangeurs cationiques fortement acides à base de copolymérisats styrène-divinylbenzène, caractérisé en ce qu'on soumet un échangeur cationique fortement acide, substitué sur le noyau avec un halogène, avant son utilisation comme catalyseur, à l'abri de l'oxygène et d'ions métalliques, sous une pression qui est supérieure à la pression de vapeur de l'eau à la température correspondante, à un prétraitement avec de l'eau désionisée qui a tout d'abord été débarrassée de l'oxygène dissous, à une température comprise dans la plage de 110 à 155 °C.

**2.** Procédé suivant la revendication 1, caractérisé en ce qu'on conduit le prétraitement dans un appareil dont les matériaux qui se trouvent au contact de l'échangeur cationique fortement acide et du liquide de traitement ne contiennent pas de fer.

**3.** Procédé suivant l'une des revendications précédentes, caractérisé en ce qu'on conduit le prétraitement dans une solution aqueuse qui contient un ou plusieurs alcools ayant 1 à 4 atomes de carbone.

**4.** Procédé suivant la revendication 3, caractérisé en ce qu'on utilise une solution aqueuse d'un alcool ayant 3 ou 4 atomes de carbone.

**5.** Procédé suivant l'une des revendications 3 et 4, caractérisé en ce qu'on utilise une solution aqueuse

7

d'alcool qui contient 0,5 à 20 % en volume, de préférence 1 à 10 % en volume, de l'alcool.

6. Procédé suivant l'une des revendications précédentes, caractérisé en ce qu'on entreprend le traitement à 110° C et on élève la température jusqu'à 155° C.

7. Procédé suivant l'une des revendications précédentes, caractérisé en ce qu'on conduit le traitement jusqu'à une vitesse de libération de moins de 25 mg de $H_2SO_4$/l de catalyseur x h et moins de 7 mg de HCl/l de catalyseur x h.

# Fig.1